# EUROPEAN PATENT APPLICATION

(11) **EP 4 852 262 A1**
(43) Date of publication of application: **09.12.2026**
(21) Application number: 25180984.4
(22) Date of filing: 05.06.2025
(51) Int. Cl.: H02J 3/00, H02J 15/00

(54) **ELECTROLYSIS SYSTEM AND METHOD FOR CONTROLLING SUCH A SYSTEM UNDER HIGH VOLTAGE RIDE THROUGH EVENTS**

(71) Applicant: Siemens Energy Global GmbH & Co. KG, 81739 München (DE)
(72) Inventor: Bendig, Marvin, 90513 Zirndorf (DE); Guo, Qiang, 91074 Herzogenaurach (DE); Buratckii, Artem, 90459 Nürnberg (DE); Loku, Fisnik, 90439 Nürnberg (DE)

(57) **Abstract**

Electrolysis system and method for controlling such a system under High Voltage Ride Through (HVRT) events are provided. The system and method allow measuring a rate of change of a parameter indicative of a condition of the HVRT event. Generating a feedforward signal to adjust a reference control parameter or a switching pattern to control power switching circuitry based on the condition of the HVRT event. Upon detection of the HVRT event, the feedforward signal imposes a change to the control parameter or the switching pattern to reduce the amount of power delivered to the electrolysis modules. Upon the measured rate of change indicating recovery from the HVRT event, the feedforward signal discontinues the change imposed to the reference control parameter or to the switching pattern. This is effective to quickly and reliably inhibit overshoot/undershoot of the DC current that otherwise the system would be subjected to when under HVRT events.

## Description

### TECHNICAL FIELD

Disclosed embodiments relate to electrolysis systems and method for controlling such systems in connection with Fault Ride Through (FRT) events, and, more specifically, in connection with High Voltage Ride Through (HVRT) events.

### BACKGROUND

Connecting large electrolysis systems to an electrical grid requires compliance with or fulfillment of applicable grid code requirements. Part of these requirements - especially for large plants - is a FRT capability. FRT refers to the capability of power generation systems, such as involving renewable energy sources like wind turbines and solar photovoltaic (PV) systems, or involving many consumers, to remain connected to the electrical grid during short-duration voltage disturbances or faults. This capability is crucial for maintaining grid stability and reliability.

Should a large plant trip, such as during short duration disturbances within the grid, the grid operator would struggle to appropriately re-balance the power exchange between the plant and the grid, such as shortly after occurrence of an HVRT event and shortly after clearance of the HVRT event. Due to the wide range of possible input voltages, the aging state of system components, and the specific operating points of a given electrolysis system, application of standard overvoltage protection techniques may be somewhat insufficient. At least in view of the foregoing considerations, further improvements are desirable in connection with HVRT capabilities.

### BRIEF SUMMARY

In one aspect, an electrolysis system comprises a transformer unit connected to an electrical grid. A plurality of rectifier units is connected in parallel circuit to the transformer unit to receive AC power from the transformer unit at respective AC sides of the rectifier units. A plurality of rows of electrolysis modules is connected to receive DC power from respective DC sides of the rectifier units. A DC current control loop includes a controller configured to generate a reference control parameter, such as a firing angle or a duty cycle, or a switching pattern, to control power switching circuitry in the rectifier units. A detector is configured to detect a condition of a High Voltage Ride Through (HVRT) event by way of measuring a rate of change of a parameter indicative of the condition of the HVRT event. A DC current control loop is arranged to receive a feedforward signal configured to impose, upon detection of the HVRT event, a change to the reference control parameter or to the switching pattern. The change is configured to reduce the amount of power delivered to the electrolysis modules. Upon the measured rate of change of the parameter indicating recovery from the HVRT event, the feedforward signal is configured to discontinue the change imposed to the reference control parameter or to the switching pattern.

In another aspect, a method for controlling the electrolysis system comprises measuring a rate of change of a parameter indicative of a condition of a High Voltage Ride Through (HVRT) event in connection with the electrolysis system. Generating a feedforward signal configured to adjust a reference control parameter, such as a firing angle or duty cycle, or a switching pattern, configured to control power switching circuitry in the rectifiers. Upon detection of the HVRT event, the feedforward signal is configured to impose, a change to the reference control parameter or to the switching pattern. The change is configured to reduce the amount of power delivered to the electrolysis modules. Upon the measured rate of change of the parameter indicating recovery from the HVRT event, the feedforward signal is configured to discontinue the change imposed to the reference control parameter or to the switching pattern.

### DESCRIPTION OF THE DRAWINGS

FIG. 1 is a simplified schematic of one example embodiment of an electrolysis system as may be connected in operation to receive power from an electrical grid.
FIG. 2 is a plot illustrating example High Voltage Ride Through (HVRT) requirements, which electrolysis systems are expected to comply during operation.
FIG. 3 is a plot illustrating an example functional relationship between voltage and current in a typical electrolyzer.
FIG. 4 is a simplified block diagram of an example embodiment of a disclosed DC current loop with circuitry configured to adjust a reference firing angle based on a respective condition of the HVRT event.
FIG. 5. is a plot of an example profile of an HVRT event including comparative plots indicative of DC current behavior in connection with the HVRT event.

### DETAILED DESCRIPTION OF EMBODIMENTS

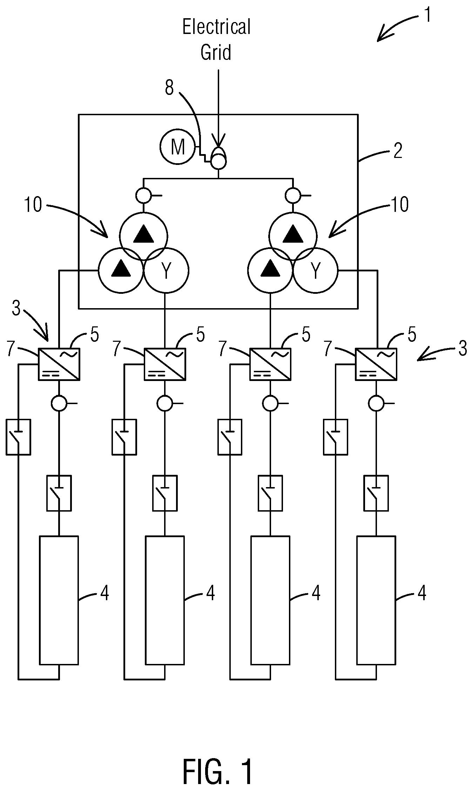

FIG. 1 is a simplified schematic of one example embodiment of an electrolysis system 1 that in operation is connected to an electrical grid. Electrolysis system 1 comprises a transformer unit 2, a plurality of rectifier units 3 connected in parallel circuit to transformer unit 2 to receive AC power from transformer unit 2 at respective AC sides 5 of the rectifier units 3, and a plurality of rows of electrolysis modules 4 connected to receive DC power from respective DC sides 7 of the rectifier units 3. Transformer unit 2 comprises an autotransformer with a tap changer 8 and two three-winding transformers 10. In one example embodiment, winding transformers 10 have a phase difference of 15° between them and are arranged to drive the rectifier units to carry out a so-called 24-pulse rectifier operation. It is reiterated that this is just one example embodiment of an electrolysis system 1 and therefore the system shown in FIG. 1 should be construed in an example sense and not in a limiting sense.

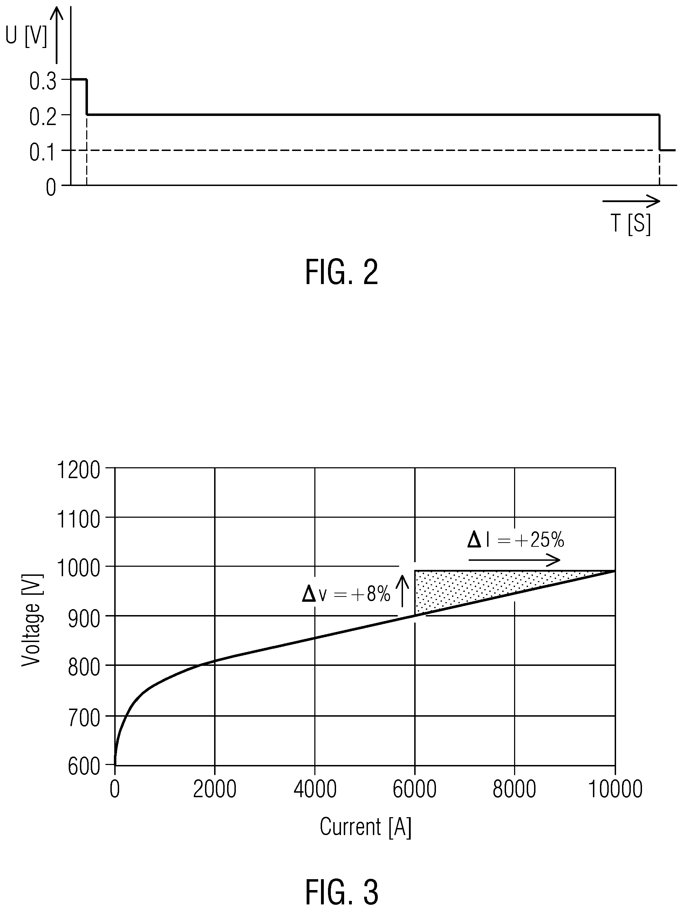

As will be appreciated by those skilled in art, the grid operator specifies a curve (one example is shown in FIG. 2) where a voltage deviation (e.g., a voltage spike) is plotted as a function of time. When the duration of the voltage increase is within certain predefined period, the plant must remain connected. Longer duration voltage increases permit plant disconnection. Similar requirements apply for temporary voltage dips. As discussed in greater detail below, fulfilling such requirements can be challenging for the electrolysis system 1.

Since electrolysis characteristics are highly dependent on the input voltage available to the electrolysis modules, even a moderate voltage increase can change the input power strongly, as can be appreciated in FIG. 3. For example, a voltage increase of approximately +8% for a new electrolysis module can lead to a current increase (and thus gas production rate) of approximately +25%. This is undesirable, as risk of performance deterioration of the cell, module or system would increase. As will be appreciated by one skilled in the art, a spike in gas production also poses operational risks (e.g., undesirable pressure increases).

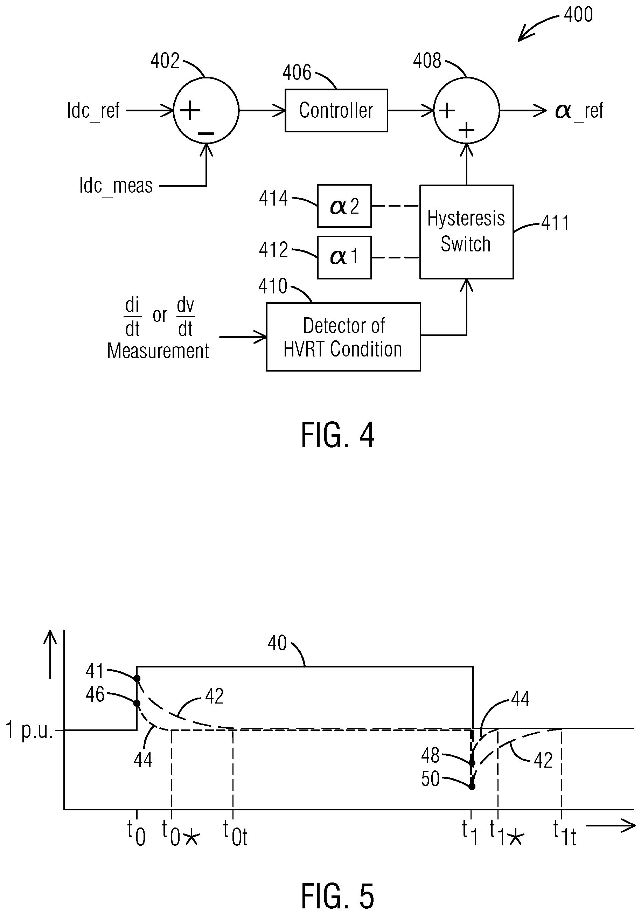

Presently, as will be appreciated by one skilled in the art, electrolyzer systems are generally controlled by proportional-integral (PI) controllers or proportional-integral-derivative (PID) controllers. Regardless of the specific control modality being utilized, such controllers exhibit a delay time between the time the overvoltage event begins and the time where the resulting overcurrent has been appropriately regulated, as elaborated in greater detail below in the context of FIG. 5.

FIG. 5 is a plot of an example profile of an HVRT event, including comparative plots indicative of DC current behavior in connection with the HVRT event. Curve 40 shows the example profile of the HVRT event, where time t₀ indicates start of the HVRT event and time t₁ indicates clearance of the HVRT event. Curve 42 shows an example of DC current behavior in connection with the HVRT event in an electrolysis system implementing standard overvoltage protection techniques, such as by way of PI or PID control. By way of comparison, curve 44 shows an example DC current behavior in connection with the HVRT event in a disclosed embodiment featuring circuity to be described below in the context of FIG. 4.

As noted above, in this example, the HVRT event starts at time t₀, where the voltage suddenly jumps from 1 p.u. (nominal voltage) to a higher value. As every control parameter of the rectifier units remains unaffected at this instant in time, the current essentially immediately shifts to a higher value, as indicated by point 41 in curve 42. For example, presuming the firing angle for firing the rectifiers (i.e., for firing the power switching circuitry in the rectifiers, such as thyristors, IGBTs, etc.) is at a baseline value, such as 0°, just prior to the HVRT event; then the firing angle immediately after the HVRT event would remain at 0°. Alternatively, also the baseline duty cycle or switching pattern of the rectifier system would initially stay unaffected leading to the above-described rise in current.

As would be appreciated by the artisan, in the context of power electronics, the firing angle refers to the phase angle of the AC input voltage (e.g., a sinusoid) when the gate current is applied to the power switching circuitry in the rectifier units to turn on such power switching circuitry. A smaller firing angle results in more power being delivered, as the power switch conducts for a relatively larger portion of the AC cycle. Conversely, a larger firing angle delays triggering the power switch, thus reducing the amount of power delivered.

As would be further appreciated by the artisan, in the context of power electronics, duty cycle refers to the percentage of time a power switch is "on" compared to the total time of a cycle. The duty cycle directly impacts the output DC voltage. A higher duty cycle generally results in a higher average DC voltage. Conversely, a lower duty cycle results in a relatively lower average DC voltage.

Similarly, switching patterns, such as can involve pulse width modulation (PWM), determine the sequence by which the power switches are switched on and off to control the output power. By adjusting the pulse width (the time the switch is ON) within the PWM pattern, the average voltage and therefore the output power can be controlled. The foregoing are examples of alternative modalities for controlling comparable power switching circuitry.

As the current immediately upon detection of the HVRT event is significantly larger than the setpoint, the control logic will eventually regulate the current down at a point t₀ₜ to its baseline or nominal value. Similarly, when the HVRT event is cleared, the voltage jumps back down at time t₁ leading to an undercurrent condition immediately after the clearing of the HVRT event and this current is eventually regulated back to its baseline value at time tit.

By way of comparison, in such situations, as elaborated in greater detail below, in disclosed embodiments we generate a feedforward signal (conceptually analogous to a fast-forward action) configured to advance the reference firing angle by a fixed value at time t₀, and in effect advantageously bypass the time delay that the controller otherwise would need to synchronize and react under such circumstances. Advancing the reference firing angle by a fixed value at time t, is effective to reduce the peak value of the overcurrent at time t₀. For example, compare the lower location of point 46 on the abscissa axis (e.g., point indicative of the overcurrent peak at time t₀) on curve 44 relative to point 41, which is indicative of the peak on curve 42. Alternatively, as noted above, the duty cycle or the switching pattern for comparable power switching circuitry can be adapted in lieu of the firing angle.

By way of comparison, when the HVRT event is cleared at time t₁, the feedforward signal is configured to discontinue the advance to the firing angle. Discontinuing advance of the fire angle upon clearance of the HVRT at time t₁, is effective to reduce the peak value of the undercurrent at time t₁. For example, compare the location of point 48 on the abscissa axis (e.g., point indicative of the undercurrent peak at time t₁) relative to the point 50 indicative of the peak on curve 42. Also note that the respective period of time that it takes for the current to return to its nominal value is shorter in disclosed embodiments. For example, compare the duration of period t₀ₜ on curve 42 relative to the shorter period t_{0*} on curve 44. Similarly, upon clearance of the HVRT event, compare duration of period tit on curve 42 relative to the shorter period t_{1*} on curve 42. Alternatively, as noted above, the duty cycle or switching pattern for comparable power switching circuitry can be adapted in lieu of the firing angle.

FIG. 4 is a simplified block diagram of an example embodiment of a disclosed DC current loop 400 with circuitry configured to adjust a reference firing angle (α_ref) based on a respective condition of the HVRT event. As shown in FIG. 4, DC current control loop 400 includes a controller 406 configured to generate the reference firing angle α_ref. A detector 410 (such as a computerized detector) is configured to detect the respective condition of the HVRT event by way of measuring a rate of change of a parameter indicative of the condition of the HVRT and comparing the measured rate of change relative to one or more predefined threshold/s. Alternatively, in lieu of the firing angle, depending on the converter technology involved, a duty cycle or switching pattern can be changed as discussed above by means of the feedforward signal.

In one example embodiment, the parameter indicative of the condition of the HVRT event is electrical current, and the rate of change of the current is measured at the DC side of a respective rectifier unit of the plurality of rectifier units. Alternatively, the parameter can be voltage, and the rate of change of the voltage is measured at the DC side of a respective rectifier unit of the plurality of rectifier units.

In operation, detector 410 is configured to generate a trigger signal based on the detected condition of the HVRT event by detector 410. One condition that can be detected by detector 410 is detection of the occurrence of the HVRT event, such as when the measured rate of change of the parameter is positive and outside the applicable rate of change threshold. Another condition that can be detected by detector 410 is recovery from the HVRT event, such as when the measured rate of change of the parameter is negative and within the applicable rate of change threshold.

The trigger signal from detector 410 is supplied to a hysteresis switch 411 so that during the HVRT event, for this condition, switch 411 is connected to a first memory 412 that stores a value α1 for adjusting the reference firing angle α_ref from controller 406. That is, when detector 410 detects occurrence of the HVRT event, hysteresis switch 411 feeds the value α1 to a node 408 of DC current control loop 400 to be additively combined with the reference firing angle α_ref. Conversely, upon detector 410 detecting recovery from the HVRT event, for this condition, hysteresis switch 411 is connected to a second memory 414 that stores a value α2 configured to discontinue the advance to the reference firing angle. That is, when detector 410 detects recovery from the HVRT event, hysteresis switch 411 feeds the value α2 to node 408 and effectively the feedforward signal is configured to discontinue the advance to the reference firing angle.

One advantageous technical benefit of hysteresis switch 411 is inhibiting or avoiding the possibility of jittering (e.g., bouncing or cycling) between memories 412, 414 due to fluctuations that can develop on the trigger signal in connection with the HVRT event.

It will be appreciated that the signal fed from switch 411 to node 408 constitutes a feedforward signal that practically instantaneously can advance the reference firing angle α_ref or otherwise change the control parameter or switching pattern from controller 406, once the HVRT event has been detected and this is effective to quickly and reliably counteract the amount of overshoot in the DC current.

As would be appreciated by one skilled in the art, the equation below can be used for calculating the DC output voltage of semiconductor-based power circuitry, such as thyristors, which are commonly used in electrolyzer applications. It should be appreciated that this is just an example since our disclosed implementation is not limited to any particular type of power circuitry that may be involved in connection with the rectifiers:
$Vdc = \left(3√2/π\right) * Vline * Cos \left(α\right) = 1.35 * Vline * Cos \left(α\right) ,$
where:
- Vdc: DC output voltage
- Vline: AC line-to-line voltage
- α: Firing angle

From the plot shown in FIG. 3, it can be estimated that with an example firing angle advance of 30 degrees, then the peak of DC overcurrent would increase approximately by just about one half the value of the current increase of 4.0 kA compared with a firing angle of zero degrees. It will be appreciated that the foregoing example of applying a firing angle advance of 30 degrees is just an example. This value can be readily adjusted based on the needs of a giving application. In the general case, the firing angle advance is in a range from 10 degrees or so to 50 degrees or so. Alternatively, the duty cycle (such as when using an intermediate buck-converter) can be advanced in a similar way leading to similar advantageous results. Alternatively, the switching pattern for the power switching circuitry can be changed in a similar way leading to similar advantageous results.

Although FIG. 4 is being described in terms of either advance (e.g., 10≤α1≤50) to the reference firing angle α_ref from controller 406 during the HVRT event and, no advance (such as when α2 is zero degrees) to the reference firing angle α_ref from controller 406 upon recovery of the HVRT event, it should be appreciated that the advance to the reference firing angle α_ref from controller 406 need not be advanced just in one shot.

It is contemplated that there may be situations where the circuitry shown in FIG. 4 may be readily adapted to flexibly accommodate various operational situations. Let us say that we define several threshold values in detector 410 to, for example, quantify the severity of the applicable rate deviation. For example, a first threshold value may be indicative that a first di/dt has been measured, and in this case one would desire to advance the firing angle by 10° upon detecting the HVRT event. A second threshold value may be indicative that a second higher di/dt has been measured, and in this case one would desire to advance the firing angle by 30° upon detecting the HVRT event. Similarly, a third threshold may be indicative that at least a third higher di/dt has been measured, and in this case one would desire to advance the firing angle by 50° upon detecting the HVRT event. In the foregoing example, the third di/dt would be more severe relative to the first i/dt and relative to the second di/dt. Similarly, the second di/dt would be more severe relative to the first di/dt.

In the foregoing example, memory 412 would store the value α1 = 10 degrees, memory 414 would store the value of zero degrees, third and fourth memories (not shown) would respectively store values of 30 degrees and 50 degrees. The key point being that the degree of firing angle advancement can be flexibly tailored considering the severity of the rate of change involved. It will be appreciated that other control parameters, such as the duty cycle, or the switching pattern for comparable rectifier systems can be similarly adapted in multiple levels or steps in lieu of a single shot.

The foregoing is a solution that in operation advantageously permits the electrolyzer system to remain connected without having to wait for resynchronization by the controller in the DC current control loop since the benefits resulting from advancing the firing angle or changing the duty cycle or the switching pattern are practically instantaneous (e.g., in the order of µs) as opposed to having to wait typically in the order of 100 ms. Moreover, electrical/electronic components of the electrolyzers system would be subject to just a portion (in our example just about one half) of the value of DC current that otherwise the electrolyzer system would be subjected to without advancement of the firing angle. That is, our disclosed solution effectively inhibits the level of electrical stress to which such components would otherwise be subjected to, and this enhances the reliability and durability of the system.

Our disclosure above has focused on a thyristor-based system, where a fixed firing angle is added to advance the control firing angle of the system considering a respective condition of the HVRT event. As noted above; however, other system modalities can also benefit from our disclosed concepts. For example, in a DC/DC based electrolysis system that may involve converters, instead of generating a feedforward signal to adjust the firing angle, one can generate a feedforward signal that changes a baseline duty cycle or changes the switching pattern considering the respective condition of the HVRT event.

## Claims

1. An electrolysis system comprising:
a transformer unit connected to an electrical grid;
a plurality of rectifier units connected in parallel circuit to the transformer unit to receive AC power from the transformer unit at respective AC sides of the rectifier units;
a plurality of rows of electrolysis modules connected to receive DC power from respective DC sides of the rectifier units;
a controller including a DC current control loop configured to generate a reference control parameter or a switching pattern configured to control power switching circuitry in the rectifiers;
a detector configured to detect a condition of a High Voltage Ride Through (HVRT) event by way of measuring a rate of change of a parameter indicative of the condition of the HVRT event; and
a DC current control loop arranged to receive a feedforward signal configured to impose, upon detection of the HVRT event, a change to the reference control parameter or to the switching pattern, the change configured to reduce the amount of power delivered to the electrolysis modules,
wherein, upon the measured rate of change of the parameter indicating recovery from the HVRT event, the feedforward signal is configured to discontinue the change imposed to the reference control parameter or to the switching pattern.

2. The electrolysis system of claim 1, wherein the parameter is electrical current, and the rate of change is measured at the DC side of a respective rectifier unit of the plurality of rectifier units.

3. The electrolysis system of claim 1, wherein the parameter is voltage, and the rate of change is measured at the DC side of a respective rectifier unit of the plurality of rectifier units.

4. The electrolysis system of claim 1, wherein the reference control parameter is a firing angle for driving the power switching circuitry.

5. The electrolysis system of claim 4, wherein the firing angle is advanced by a predefined angle upon detection of the HVRT event and wherein the advance is discontinued upon detection of recovery from the HVRT event.

6. The electrolysis system of claim 1, wherein the reference control parameter is a duty cycle for driving the power switching circuitry.

7. The electrolysis system of claim 6, wherein the duty cycle is shifted from a baseline value to a predefined value upon detection of the HVRT event and wherein the duty cycle is returned to the baseline value upon detection of recovery from the HVRT event.

8. The electrolysis system of claim 1, wherein the DC current control loop comprises a hysteresis switch responsive to a signal indicative of the condition of the HVRT event, wherein, upon detection of the HVRT event, the hysteresis switch is connected to a first memory arranged to store a first value so that the reference control parameter is changed considering the first value, and wherein upon clearance of the HVRT event the hysteresis switch is connected to a second memory arranged to store a second value so that the feedforward signal is configured to discontinue the change imparted to the reference control parameter.

9. A method for controlling an electrolysis system comprising a transformer unit, rectifier units connected in parallel circuit to the transformer unit, and a plurality of rows of electrolysis modules connected at respective DC sides of the rectifier units, the method comprising:
measuring a rate of change of a parameter indicative of a condition of a High Voltage Ride Through (HVRT) event in connection with the electrolysis system; and
generating a feedforward signal configured to adjust a reference control parameter or a switching pattern configured to control power switching circuitry in the rectifiers,
wherein, upon detection of the HVRT event, the feedforward signal is configured to impose, a change to the reference control parameter or to the switching pattern, the change configured to reduce the amount of power delivered to the electrolysis modules,
wherein, upon the measured rate of change of the parameter indicating recovery from the HVRT event, the feedforward signal is configured to discontinue the change imposed to the reference control parameter or to the switching pattern.

10. The method of claim 9, wherein the parameter is electrical current, and the measuring of the rate of change of the electrical current is at the DC side of a respective rectifier unit of the plurality of rectifier units.

11. The method of claim 9, wherein the parameter is voltage, and the measuring of the rate of change of the voltage is at the DC side of a respective rectifier unit of the plurality of rectifier units.

12. The method of claim 9, wherein the reference control parameter is a firing angle for driving the power switching circuitry.

13. The method of claim 9, wherein the reference control parameter is a duty cycle for driving the power switching circuitry.

14. The method of claim 12, further comprising advancing the firing angle by a predefined angle upon detection of the HVRT event and discontinuing the advance of the firing angle upon detection of recovery from the HVRT event.

15. The method of claim 13, further comprising shifting the duty cycle from a baseline value to a predefined value upon detection of the HVRT event and wherein the duty cycle is returned to the baseline value upon detection of recovery from the HVRT event.
